(19) Europäisches Patentamt
European Patent Office
Office européen des brevets

(11) Veröffentlichungsnummer: **0 382 009 B1**

(12) **EUROPÄISCHE PATENTSCHRIFT**

(45) Veröffentlichungstag der Patentschrift: **12.04.95**

(51) Int. Cl.6: **B01D 71/56**, B01D 71/44, B01D 67/00, //C08L77/10

(21) Anmeldenummer: **90101455.5**

(22) Anmeldetag: **25.01.90**

# (54) Semipermeable Membran aus einer homogen gemischten Polymerlegierung.

(30) Priorität: **02.02.89 DE 3903098**

(43) Veröffentlichungstag der Anmeldung:
**16.08.90 Patentblatt 90/33**

(45) Bekanntmachung des Hinweises auf die Patenterteilung:
**12.04.95 Patentblatt 95/15**

(84) Benannte Vertragsstaaten:
**AT BE CH DE DK ES FR GB IT LI NL SE**

(56) Entgegenhaltungen:
**EP-A- 0 082 433**
**EP-A- 0 168 783**
**EP-A- 0 219 878**
**EP-A- 0 228 072**
**US-A- 4 051 300**

(73) Patentinhaber: **HOECHST AKTIENGESELL-SCHAFT**

**D-65926 Frankfurt (DE)**

(72) Erfinder: **Haubs, Michael, Dr.**
**Auf dem Weiher 18**
**D-6550 Bad Kreuznach (DE)**
Erfinder: **Kreuder, Willi, Dr.**
**Richard-Schirrmann-Strasse 7**
**D-6500 Mainz (DE)**
Erfinder: **Krieg, Claus-Peter, Dr.**
**Im Mainfeld 42**
**D-6000 Frankfurt/M 71 (DE)**
Erfinder: **Wildhardt, Jürgen**
**Am Südhang 32**
**D-6274 Hünstetten-Wallrabenstein (DE)**

EP 0 382 009 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine semipermeable Membran aus einer homogen gemischten Polymerlegierung, die als Hauptbestandteile Polyamid und Polyvinylpyrrolidon enthält, sowie ein Verfahren zu ihrer Herstellung.

Seit der Einführung asymmetrischer Membranen aus Celluloseacetat durch Loeb und Sourirajan, (S. Sourirajan, Reverse Osmosis, Logos Press, London 1970) und aus hydrophoben Polymerisaten (US-PS 3,615,024) sind zahlreiche Membranen, insbesondere für Separationen von in Wasser gelösten nieder- und makromolekularen Bestandteilen entwickelt und vorgeschlagen worden, deren Struktur und Eignung in der Literatur angegeben (Desalination, 35 (1980), 5-20) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Infolge ihres chemischen Aufbaus und ihrer baulichen Struktur können die einzelnen Membranen jeweils nur für ganz spezielle Separationsprobleme optimal geeignet sein. Hieraus resultiert die grundlegende Forderung, für neue Aufgabenstellungen stets neue Membranen zu entwickeln.

In der EP-A-0 082 433 wird eine übersichtliche Darstellung über die Vor- und Nachteile bereits bekannter Membranen gegeben. So gibt es beispielsweise hydrophile, asymmetrische Membranen aus Celluloseacetat mit befriedigenden antiadsorptiven Eigenschaften, die aber bezüglich ihrer thermischen und chemischen Beständigkeit sehr zu wünschen lassen. Membranen aus Polysulfonen oder ähnlichen Polymeren besitzen zwar eine gute thermische und chemische Beständigkeit, allerdings besteht bei solchen Membranen wegen der hydrophoben Eigenschaften der eingesetzten Polymeren eine ausgeprägte Neigung, gelöste Stoffe zu adsorbieren, wodurch sich die Membran quasi verstopft. Die EP-A-0 082 433 beschreibt Membranen aus einer hydrophilen und einer hydrophoben Komponente. Als hydrophobe Komponente werden Polysulfone, Polyethersulfone, aromatische und araliphatische Polyamide beschrieben. Als hydrophile Komponente ist PVP mit einem Molekulargewicht (MW) von mindestens 100 000 Dalton genannt. Das hohe MW gewährleistet, daß das PVP beim Fällprozeß in die Membran eingebaut und nicht wieder herausgelöst wird. Diese Mischungen sind jedoch gegenüber der Einwirkung von organischen Lösemitteln empfindlich. Auch bestehen bei diesen Membranen noch Probleme, wenn sie bei der Abwasseraufbereitung eingesetzt werden; falls sogenannte Silikonentschäumer im Abwasser anwesend sind, dann verstopfen diese Membranen.

Die US-A-4 051 300 beschreibt Membranen, welche aus Polysulfon oder aus Polyamid aufgebaut sind. Bei der Herstellung dieser Membranen wird der Gießlösung PVP als viskositätsregelnde Komponente zugesetzt und nach dem Fällen wieder herausgewaschen. Nach dieser Lehre sind hydrophobe Membranen mit guten thermischen Eigenschaften und guter chemischer Beständigkeit erhältlich, welche jedoch aufgrund ihrer mangelnden Hydrophilie eine ausgeprägte Neigung besitzen, gelöste Stoffe zu absorbieren.

Hydrophilie und gleichzeitig Resistenz gegenüber Lösemitteln findet man bei Membranen aus Celluloseregenerat; diese sind aber in sauren oder alkalischen Medien relativ leicht hydrolysierbar, und darüber hinaus werden sie von Mikroorganismen leicht angegriffen.

Der Erfindung liegt die Aufgabe zugrunde, semipermeable Membranen bereitzustellen, die ausgeprägte hydrophile Eigenschaften besitzen, d. h. befähigt sind, erhebliche Mengen Wasser, bezogen auf ihr Gesamtgewicht, aufzunehmen, die gegen verseifende sowie gegen oxidative Agenzien sowie gegenüber thermischer Einwirkung beständig sind, die organischen Lösemitteln besser widerstehen als Membranen aus hydrophobem Polymerisat, die geringe Proteinadsorption zeigen, die gute Benetzbarkeit aufweisen und die auch gegenüber der Einwirkung von Mikroorganismen unempfindlich sind.

Gelöst wird diese Aufgabe durch eine Membran der eingangs genannten Gattung, deren kennzeichnendes Merkmal darin zu sehen ist, daß
das aromatische Polyamid aus den folgenden allgemeinen, wiederkehrenden Struktureinheiten der Formel (I) aufgebaut ist:

$$-\!\!\left(\overset{\overset{O}{\|}}{C} - E^1 - \overset{\overset{O}{\|}}{C} - NH - E^2 - NH\right)\!\!- \qquad (I)$$

in der $E^1$ und $E^2$ gleich oder verschieden sind und aus den Gruppierungen

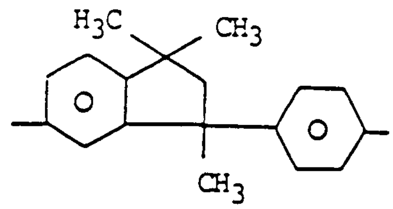

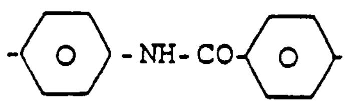

- $Ar^1$-
- $Ar^1$-X-$Ar_2$- ausgewählt sind,

in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, -$CF_3$ oder Halogen substituiert sein können, bedeuten und der Rest X

a) eine direkte Bindung ist oder einen der folgenden zweiwertigen Reste darstellt -O-, -$C(CF_3)_2$-, -$SO_2$-, -CO-, -$C(R^1)_2$-, in dem $R^1$ Wasserstoff, ($C_1$-$C_6$)-Alkyl oder Fluoralkyl mit 1 bis 4 C-Atomen in der Alkylgruppe ist, oder

b) -Z-$Ar^1$-Z-, in dem Z der Rest -O- oder -$C(CH_3)_2$ ist, oder

c) -O-$Ar^1$-Y-$Ar^2$-O-, in der Y die unter Xa) angegebene Bedeutung hat.

Das für die erfindungsgemäße Membran zweckmäßigerweise eingesetzte aromatische Polyamid kann sowohl als statistisches Copolymer als auch als Block- oder Pfropfcopolymer vorliegen.

Zur Herstellung der aromatischen Polyamide mit den wiederkehrenden Struktureinheiten der Formel (I) sind insbesondere die folgenden Verbindungen geeignet:

als Dicarbonsäurederivate der Formel

Cl - CO - $Ar^1$ - CO - Cl

4,4'-Diphenylsulfondicarbonsäuredichlorid, 4,4'-Diphenyletherdicarbonsäuredichlorid, 4,4'-Diphenyldicarbonsäuredichlorid, 2,6-Naphthalindicarbonsäuredichlorid, Isophthalsäuredichlorid, ganz besonders aber Terephthalsäuredichlorid und substituiertes Terephthalsäuredichlorid, z. B. 2-Chlor-Terephthalsäuredichlorid;

als aromatische Diamine der Struktur $H_2N$-$Ar^1$-$NH_2$ m-Phenylendiamine bzw. substituierte Phenylendiamine, z. B. 2-Chlor-, 2,5-Di-Chlor- oder 2-Methoxy-p-Phenylendiamin, insbesondere p-Phenylendiamin;

als substituierte Benzidinderivate 3,3'-Dimethoxy-, 3,3'-Di-Chlor-, 2,2'-Dimethyl- und vorzugsweise 3,3'-Dimethylbenzidin;

als Diaminkomponenten der Formel

$H_2N$-$Ar^1$-X-$Ar^2$-$NH_2$

4,4'-Diaminobenzophenon, Bis[4-Aminophenyl]-sulfon, Bis[4-(4'-Aminophenoxy)phenyl]-sulfon, 1,2-Bis[4'-Aminophenoxy]-benzol, 1,4-Bis[(4'-Aminophenyl)isopropyl]-benzol, 2,2'-Bis[4-(4'-Aminophenoxy)phenyl]-propan, insbesondere 1,4-Bis-(4'-aminophenoxy)benzol, und Gemische der genannten Diamine.

Legierungen, die zur Herstellung bevorzugter Ausgestaltungsformen erfindungsgemäßer Membranen geeignet sind, sind in den Unteransprüchen 4 bis 7 angegeben.

Die Herstellung von Polyaramiden kann in bekannter Weise durch Lösungs-, Grenzflächen- oder Schmelzekondensation erfolgen.

Die Lösungskondensation der aromatischen Dicarbonsäuredichloride mit den aromatischen Diaminen erfolgt in aprotischen, polaren Lösungsmitteln vom Amidtyp wie z. B. in N,N-Dimethylacetamid oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und/oder zweiten Gruppe des periodischen Systems zugegeben werden. Bevorzugte Zusätze sind Calciumchlorid und/oder Lithiumchlorid.

Die Polykondensationstemperaturen liegen üblicherweise zwischen -20 °C und +120 °C, bevorzugt zwischen +10 °C und +100 °C. Besonders gute Ergebnisse werden bei Reaktionstemperaturen zwischen

+10 °C und +80 °C erzielt. Die Polykondensationsreaktionen werden vorzugsweise so ausgeführt, daß nach Abschluß der Reaktion 2 bis 30, vorzugsweise 6 bis 15 Gew.-% an Polykondensat in der Lösung vorliegen.

Die Polykondensation kann in üblicher Weise z. B. durch Zugabe von monofunktionellen Verbindungen wie z. B. Benzoylchlorid gestoppt werden.

Nach Beendigung der Polykondensation, d. h. wenn die Polymerlösung den zur Weiterverarbeitung erforderlichen Staudinger-Index erreicht hat, wird der entstandene und locker an das Amidlösungsmittel gebundene Chlorwasserstoff durch Zugabe basischer Substanzen neutralisiert. Dafür geeignet sind beispielsweise Lithiumhydroxyd, Calziumhydroxyd, insbesondere aber Calziumoxid.

Der Staudinger-Index ist ein Maß für die mittlere Kettenlänge der entstandenen Polymeren.

Der Staudinger-Index der membranbildenden aromatischen Polyamide soll zwischen 50 und 1 000 $cm^3/g$, bevorzugt zwischen 100 und 500 $cm^3/g$, besonders bevorzugt zwischen 150 und 350 $cm^3/g$, liegen. Er wurde bestimmt an Lösungen von jeweils 0,5 g Polymer in 100 ml 96%iger Schwefelsäure bei 25 °C.

Unter Staudinger-Index [$\eta$] (Grenzviskosität, intrinsic viscosity) wird der Ausdruck

$$\lim_{C_2 \to 0} \frac{\eta_{sp}}{C_2} = [\eta]$$

verstanden, wobei

$\eta_{sp}$ = spezifische Viskosität = $\frac{\eta}{\eta_1}$ - 1
$C_2$ = Konzentration des gelösten Stoffes
$\eta$ = Viskosität der Lösung
$\eta_1$ = Viskosität des reinen Lösemittels

ist.

Die Legierungen gemäß der Erfindung können in üblicher Weise hergestellt werden aus gemeinsamer Lösung von PVP und einem Polyaramid in einem aprotischen organischen Lösungsmittel, z. B. Dimethylformamid, Dimethylsulfoxid, N-Methylpyrrolidon oder N,N-Dimethylacetamid. Dazu stehen beispielsweise folgende Möglichkeiten zur Wahl:

1.
   a) Polykondensation eines Polyaramids mittels Lösungs-, Grenzflächen- oder Schmelzekondensation,
   b) Lösen des resultierenden Polyaramids,
   c) Lösen von PVP und
   d) anschließend Mischen der PVP- mit der Polyaramidlösung.
2.
   a) Lösungskondensation eines Polyaramids und
   b) anschließend direktes Beimengen von trockenem PVP oder einer PVP-Lösung direkt in den Polykondensationsansatz.
3. Überraschend wurde gefunden, daß die Lösungskondensation eines Polyaramids in Gegenwart von PVP erfolgen kann und auf diese Weise auch homogene Mischungen erhalten werden können. Es werden die Diamine gemeinsam mit PVP gelöst und durch Zugabe von Dicarbonsäuredichloriden eine PVP/Polyaramid-Lösung kondensiert.

Die Legierungen können durch Entfernen des Lösungsmittels, z. B. durch Verdampfen, isoliert und zu Zwischenprodukten (Granulat oder Pulver) weiterverarbeitet werden, die dann als Rohstoffe für die Membranherstellung eingesetzt werden können.

Das Molekulargewicht des PVP, angegeben als Gewichtsmittel, liegt im allgemeinen bei 1 000 bis 3 Millionen, vorzugsweise bei 40 000 bis 200 000, insbesondere bei 50 000 bis 100 000.

Die Legierungen der Erfindung stellen Polymerisatgemische dar, deren Komponenten in allen Verhältnissen homogen gemischt sind. Insbesondere enthalten die Legierungen PVP in Mengen von 1 bis 80 Gew.-%, bevorzugt von 5 bis 60 Gew.-% und besonders bevorzugt von 10 bis 50 Gew.-%, bezogen auf die Summe der Komponenten (a+b).

Die im vorstehenden beschriebenen Polymerlegierungen sind als solche nicht Gegenstand der vorliegenden Erfindung, sondern diese werden in einer mit gleicher Priorität eingereichten Patentanmeldung im Zusammenhang mit Formkörpern ausführlich beschrieben. Die Erfindung betrifft vielmehr eine semipermeable Membran enthaltend die genannte Polymerlegierung als Hauptbestandteil.

Zur Herstellung der erfindungsgemäßen Membran aus der Polymerlegierung wird die bereits beschriebene Lösung der Legierung filtriert, entgast, und dann wird in bekannter Weise nach dem Phaseninversionsverfahren (Robert E. Kesting, "Synthetic Polymeric Membranes", 2nd Ed., 1985, S. 237 ff.) eine semipermeable Membran hergestellt. Zu diesem Zweck wird die Polymerisatlösung auf eine möglichst plane Unterlage als flüssige Schicht ausgebreitet. Die plane Unterlage kann beispielsweise aus einer Glasplatte oder aus einer Metalltrommel bestehen.

Danach läßt man auf die flüssige Schicht Fällflüssigkeit einwirken, die mit dem Lösungsmittel der Lösung mischbar ist, in der aber die in der Polymerisatlösung gelösten Polymerisate als Membran ausgefällt werden. Als Fällflüssigkeit wird beispielsweise Wasser verwendet. Durch die Einwirkung der Fällflüssigkeit auf die flüssige Schicht aus Polymerenlösung werden die in dieser gelösten Substanzen unter Ausbildung einer semipermeablen Membran ausgefällt.

Bei der Verfahrensdurchführung läßt man die Fällflüssigkeit vorteilhaft so lange auf die durch diese ausgefällte Membran einwirken, bis aus dieser praktisch das gesamte Lösungsmittel durch Fällflüssigkeit ersetzt ist. Danach wird die gebildete Membran von Fällflüssigkeit befreit, beispielsweise dadurch, daß man die Membran direkt in einem Luftstrom trocknet oder aber zunächst mit einem Weichmacher wie Glycerin behandelt und danach trocknet.

Zur Herstellung von Membranen, die auf einer Trägerschicht angeordnet sind, welche für strömungsfähige Medien durchlässig ist, geht man wie vorstehend angegeben vor, verwendet jedoch als Unterlage zur Ausbildung der Membranschicht als Träger für diese ein Vlies, z. B. aus Kunststoff, oder ein Papier und beläßt nach Ausbildung der Membranschicht diese auf der Unterlage. Die Membran kann aber auch zunächst trägerfrei hergestellt und erst danach auf einen durchlässigen Träger aufgebracht werden.

In bekannter Weise sind aus der Lösung der Polymerlegierung auch Hohlfäden bzw. Kapillaren herstellbar, indem man die Polymerisatlösung nach dem Stande der Technik durch eine entsprechend ausgebildete formgebende Ringspalt- bzw. Hohlnadeldüse in Fällflüssigkeit einspinnt. Hierbei können nach dem Stand der Technik die Herstellungsbedingungen so gewählt werden, daß sich eine Außen-oder Innenhaut oder beides bilden. Die Wandstärke derartiger Kapillaren oder Hohlfasern liegt üblicherweise im Bereich von 20 bis 500 µm.

Wird die Membran nach der Koagulation mit Glycerin getränkt, so kann sie vorzugsweise im Bereich von 5 bis 60 % Glycerin, bezogen auf ihr Gesamtgewicht, enthalten; die derart imprägnierte Membran wird getrocknet, z. B. bei einer Temperatur von 50 °C.

Die erfindungsgemäße Membran eignet sich ebenfalls als Trägermembran für permselektive Schichten, die direkt auf oder in der Membran erzeugt werden. So können beispielsweise "ultradünne" Schichten (<1 µm) aus Polymeren mit funktionellen Gruppen (z. B. Silikone, Celluloseether, Fluorcopolymere) auf Wasser gespreitet werden, von dort auf die Membranoberfläche aufgebracht und z. B. durch Reaktion mit einem Diisocyanat kovalent fixiert werden, um somit höhere Permselektivitäten zu erzielen. Analog eignet sich die erfindungsgemäße Membran auch als Träger reaktiver Moleküle, beispielsweise um Enzyme oder Antikoagulantien wie Heparin nach dem Stande der Technik zu fixieren.

Die Dicke der erfindungsgemäßen Membran ohne Trägerschicht liegt im Bereich von 10 bis 300 µm, insbesondere von 20 bis 120 µm.

Die Erfindung soll nachfolgend anhand von Ausführungsbeispielen noch eingehender dargestellt werden, ohne jedoch auf die dort angegebenen Ausführungsformen beschränkt zu sein.

Beispiele 1 bis 7

Für die Herstellung der in den Beispielen untersuchten Membranen wurde in N-Methylpyrrolidon als Lösemittel zunächst das Copolyaramid I aus

(A′) ca. 95 bis 100 Mol-% Terephthalsäuredichlorid (TPC),
(B′) 25 Mol-% Paraphenylendiamin (PPD),
(C′) 50 Mol-% 3,3′-Dimethylbenzidin (DMB) und
(D′) 25 Mol-% 1,4-bis-(4-Aminophenoxy)-benzol (BAPOB)

bei einer Temperatur von 50 °C hergestellt.

In gleicher Weise wurde das Polyaramid II aus ca. 95 bis 100 Mol-% Terephthalsäuredichlorid und 100 Mol-% Bis[t4-(4'-Aminophenoxy)phenyl]sulfon hergestellt.

Nach der Neutralisation mit 100 Mol-% CaO wurden zu diesen Lösungen unterschiedliche Mengen an Poly-N-Vinylpyrrolidon in festem Zustand unter Rühren zugegeben. Die resultierenden klaren Lösungen mit verschiedenen Staudinger-Indices und von verschiedenen Konzentrationen (genauere Angaben siehe Tabelle 1) wurden dann mit einer Gießvorrichtung gemäß US-A-4 229 291 auf ein Polypropylen-Trägervlies (erhältlich bei Fa. Freudenberg:

FO 2430(R) 100 g/m²) aufgebracht und in Wasser bei 14 °C koaguliert. Die Membranen sind dann mit einer wäßrigen Lösung von 40 Gew.-% Glycerin getränkt und bei 50 °C getrocknet worden. Die trockenen trägerverstärkten Membranen besaßen eine Dicke von 280 µm.

Durch eine Wärmebehandlung der Membran ist überraschenderweise eine nachträgliche Veränderung der Membraneigenschaften zu erreichen. In den Beispielen 2 und 4 wird gezeigt, wie durch Einlegen der Membran in heißes Wasser (100 °C) eine sehr wesentliche Erhöhung des Rückhaltevermögens für gelöste Substanzen ermöglicht wird.

Die Membraneigenschaften der so hergestellten Membranen sind in der nachfolgenden Tabelle 1 angegeben.

- Der Staudinger-Index für das aromatische Polyaramid wurde wie in der Beschreibung angegeben in 96 % $H_2SO_4$ bei 25 °C bestimmt.
- Die mechanische Permeabilität (Ultrafiltration) und das Rückhaltevermögen gegenüber gelösten Makromolekülen wurden bei Drücken von 3,0 bar bei 20 °C in einer gerührten zylindrischen Zelle bestimmt (700 U/min, 350 ml, Membranfläche 43 cm²).

Das Rückhaltevermögen ist definitionsgemäß

$$R = \frac{C_1 - C_2}{C_1} \cdot 100 \quad [\%]$$

$C_1$ ist die Konzentration der wäßrigen Testlösung,
$C_2$ ist die Konzentration im Permeat.

Als Testlösung wurde eine 2%ige wäßrige Polyvinylpyrrolidonlösung (PVP) eingesetzt, erhältlich unter dem Namen "Kollidon K30"(R) der Firma BASF, die Molmasse des Polyvinylpyrrolidons betrug 49 000 Dalton.

Die Konzentrationsmessungen erfolgten in einem digitalen Dichtemeßgerät "DMA 60 + 601"(R) der Firma Heraeus.

Tabelle 1

| Beispiel | Polyaramid | Staudinger-Index des Polyaramids (ml/g) | Polymerkonzentration (%) | Konzentration an PVP (%) | Konzentration an $CaCl_2$ (%) | mechan. Permeabilität ($l/m^2 \cdot h$) | Rückhaltevermögen (%) | Testsubstanz |
|---|---|---|---|---|---|---|---|---|
| 1 | Copolyaramid I | 188 | 6,0 | 4,0 (K30) | 2,8 | 460 | 87 | PVP K30 |
| 2[a)] | dto. | 188 | 6,0 | 5,2 (K30) | 2,8 | 170 | 95 | PVP K30 |
| 3 | dto. | 220 | 7,0 | 3,1 (K30) | 3,2 | 105 | 71 | Dex T10[c)] |
| 4[b)] | dto. | 220 | 7,0 | 6,0 (K30) | 3,2 | 75 | 97 | Dex T10[c)] |
| 5 | dto. | 250 | 6,0 | 3,9 (K30) | 3,0 | 265 | 89 | PVP K30 |
| 6 | dto. | 188 | 5,0 | 5,2 (K90) | 2,4 | 360 | 78 | PVP K30 |
| 7 | Polyaramid II | 155 | 8,0 | 5,8 (K30) | 1,6 | 680 | 73 | PVP K30 |

Alle Konzentrationsangaben sind in Gewichtsprozent/Gesamtgewicht Lösung

a) thermische Nachbehandlung: 1 h in Wasser bei 100 °C

b) thermische Nachbehandlung: 9 h in Wasser bei 100 °C

c) Dextran 10.000 (Pharmacia)

Beispiele 8 bis 10

Um die Lösemittelbeständigkeit der erfindungsgemäßen Membranen zu testen, wurden die Membranen der Beispiele 1 bis 3 eine Stunde in Aceton gelegt, um die in den Poren der Membranen enthaltene Flüssigkeit gegen Aceton auszutauschen. Danach wurden die Membranen über einen Zeitraum von 12 h

den in Tabelle 2 angegebenen Lösemitteln bei einer Temperatur von 25 °C ausgesetzt. Im Anschluß daran wurden die Membranen auf Wasser umkonditioniert, und es wurde wie unter Beispiel 1 angegeben die mechanische Permeabilität und das Rückhaltevermögen an den mit den organischen Lösemitteln behandelten Membranen gemessen. Die Ergebnisse sind in Tabelle 2 dargestellt und zeigen, daß die Abweichungen von den in Tabelle 1 angegebenen Werten innerhalb der Toleranzgrenzen des Meßverfahrens liegen.

Tabelle 2

| Beispiel | Membran aus Beispiel | Lösemittel | mech.Permeabilität ($l/m^2h$) | Rückhaltevermögen (%) | Testsubstanz |
|---|---|---|---|---|---|
| 8 | 1 | Toluol | 340 | 88 | PVP K30 |
| 9 | 2 | $CHCl_3$ | 150 | 95,5 | PVP K30 |
| 10 | 3 | Essigsäureethylester | 95 | 69 | Dextran T10 |

Beispiele 11 bis 17

Mit den Membranen aus Beispiel 1 bis 7 wurden in einer Rührzelle wäßrige Lösungen (0,05 %) des farbigen Proteins Cytochrom C ultrafiltriert. Nach einer Versuchsdauer von 30 min wurde die Membran gründlich mit Pufferlösung (pH 6,8) gewaschen. Die Membranen zeigten keine Anfärbung von rotem Cytochrom C, was auf eine niedrige Proteinadsorption hindeutet.
Membranen mit gleicher Molekulargewichtsausschlußgrenze aus verschiedenen aromatischen Polyamiden oder Polysulfon hingegen zeigten starke Proteinadsorption.

**Patentansprüche**

**1.** Semipermeable Membran aus einer homogen gemischten Polymerlegierung, die als Hauptbestandteile ein aromatisches Polyamid und Polyvinylpyrrolidon enthält, wobei das aromatische Polyamid ein Homo- oder Copolyaramid ist mit mindestens einer wiederkehrenden Struktureinheit der Formel (I)

$$-\!\!\left(\overset{O}{\overset{\|}{C}} - E^1 - \overset{O}{\overset{\|}{C}} - NH - E^2 - NH\right)\!\!- \qquad (I)$$

in der $E^1$ und $E^2$ gleich oder verschieden sind und aus den Gruppierungen

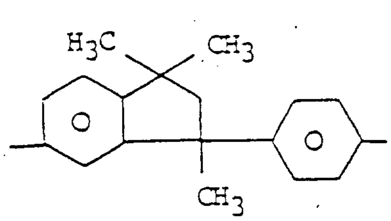

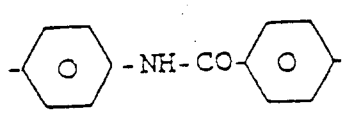

- $Ar^1$-
- $Ar^1$-X-$Ar^2$- ausgewählt sind,
in denen $Ar^1$ und $Ar^2$ gleiche oder verschiedene 1,2-Phenylen-, 1,3-Phenylen- oder 1,4-Phenylenreste, die durch ($C_1$-$C_6$)-Alkyl, ($C_1$-$C_6$)-Alkoxy, -$CF_3$ oder Halogen substituiert sein können, bedeuten und der Rest X

a) eine direkte Bindung ist oder einen der folgenden zweiwertigen Reste darstellt
$-O-$, $-C(CF_3)_2-$, $-SO_2-$, $-CO-$, $-C(R^1)_2-$, in dem $R^1$ Wasserstoff, $(C_1-C_6)$-Alkyl oder Fluoralkyl mit 1 bis 4 C-Atomen in der Alkylgruppe ist, oder
b) $-Z-Ar^1-Z-$, in dem Z der Rest -O- oder $-C(CH_3)_2$ ist, oder
c) $-O-Ar^1$ $Y-Ar^2-O-$, in der Y die unter Xa) angegebene Bedeutung hat.

**2.** Membran nach Anspruch 1, dadurch gekennzeichnet, daß der Halogenrest Fluor, Chlor oder Brom ist.

**3.** Membran nach einem der Ansprüche 1 oder 2, dadurch gekennzeichnet, daß die Gruppierung $E^1$ in den Struktureinheiten gleich oder verschieden ist und einen 1,3- oder 1,4-Phenylenrest oder den Rest

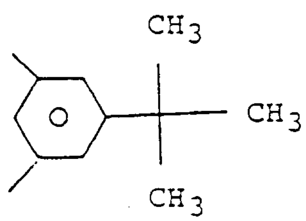

oder

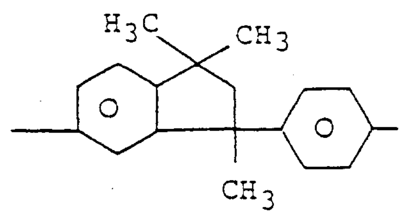

darstellt.

**4.** Membran nach einem der Ansprüche 1 oder 2, dadurch gekennzeichnet, daß die Gruppierung $E^2$ in den Struktureinheiten gleich oder verschieden ist und den 1,4-Phenylenrest oder den Rest

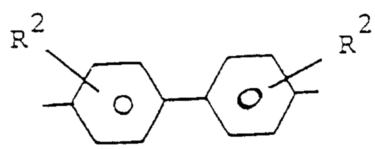

in dem $R^2$ einen niederen Alkyl- oder Alkoxyrest mit bis zu je 4 C-Atomen in der Alkylgruppe oder F, Cl oder Br darstellt, oder den Rest

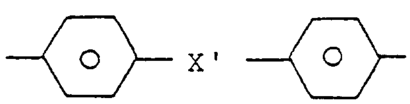

bedeutet, wobei X' die Gruppe $-C(R^1)_2-$, in der $R^1$ Wasserstoff oder $(C_1-C_4)$-Alkyl ist, oder die Gruppierung

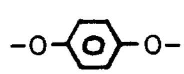

darstellt.

**5.** Membran nach einem oder mehreren der Ansprüche 1 bis 4, enthaltend
a) Poly-N-vinylpyrrolidon und
b) wenigstens ein Copolyaramid mit mindestens drei statistisch wiederkehrenden Struktureinheiten der Formel (I), in der
$E^1$ ein zweiwertiger p-Phenylenrest ist,
$E^2$ in den drei wiederkehrenden Struktureinheiten je einmal ein zweiwertiger p-Phenylenrest, ein Rest der Formel

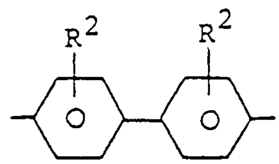

mit $R^2$ gleich $-CH_3$, $OCH_3$, F, Cl oder Br, und ein Rest der Formel

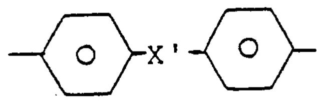

ist, bei dem X' die oben angeführte Bedeutung hat.

**6.** Membran nach Anspruch 5, dadurch gekennzeichnet, daß das Copolyaramid die wiederkehrenden Struktureinheiten

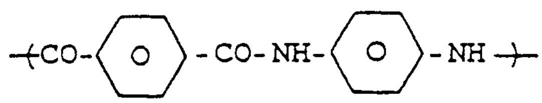

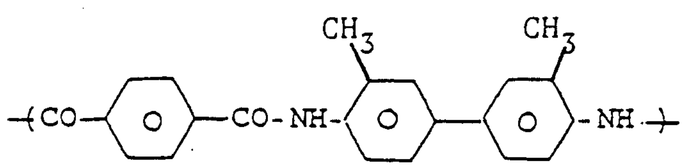

und

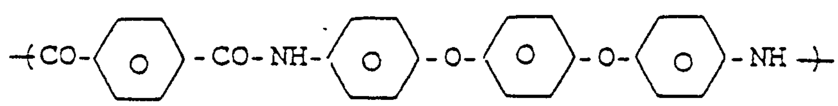

aufweist.

**7.** Membran nach einem oder mehreren der Ansprüche 1 bis 6, dadurch gekennzeichnet, daß das aromatische Polyamid sowohl als statistisches Copolymer als auch als Block- oder Pfropfcopolymer vorliegen kann.

**8.** Membran nach einem oder mehreren der Ansprüche 1 bis 7, dadurch gekennzeichnet, daß die homogen mischbare Polymerlegierung durch Polykondensation aromatischer Diamine und aromatischer Dicarbonsäuren oder deren zur Polykondensation befähigter Derivate in Gegenwart von Polyvinylpyrrolidon hergestellt ist.

**9.** Membran nach einem oder mehreren der Ansprüche 1 bis 8, dadurch gekennzeichnet, daß sie Polyvinylpyrrolidon mit einem Molekulargewicht, angegeben als Gewichtsmittel, im Bereich von 1 000 bis 3 Millionen, vorzugsweise von 40 000 bis 200 000, enthält.

**10.** Membran nach einem oder mehreren der Ansprüche 1 bis 9, dadurch gekennzeichnet, daß das Polyvinylpyrrolidon in Mengen von 1 bis 80 Gew.-%, vorzugsweise von 5 bis 60 Gew.-%, bezogen auf die Summe der Komponenten, enthalten ist.

**11.** Membran nach einem oder mehreren der Ansprüche 1 bis 10, dadurch gekennzeichnet, daß sie asymmetrisch ist.

**12.** Verfahren zur Herstellung einer Membran nach einem der Ansprüche 1 bis 11, bei dem die Lösung der homogen mischbaren Polymerlegierung auf eine plane Unterlage als flüssige Schicht ausgebreitet und danach auf die flüssige Schicht Fällflüssigkeit aufgebracht wird, die mit dem Lösungsmittel der Lösung mischbar ist, in der aber die gelöste homogen mischbare Polymerlegierung als Membran ausgefällt wird, dadurch gekennzeichnet, daß als Lösemittel für die homogen mischbare Polymerlegierung aprotische, polare Lösemittel vom Amidtyp, vorzugsweise N,N-Dimethylacetamid oder insbesondere N-Methyl-2-pyrrolidin, verwendet werden.

**13.** Verfahren nach Anspruch 12, dadurch gekennzeichnet, daß ein Teil des Lösungsmittels vor der Koagulation zur Membran verdunstet wird.

**14.** Verfahren nach Anspruch 12, dadurch gekennzeichnet, daß als Fällflüssigkeit Wasser verwendet wird.

**15.** Verfahren nach einem der Ansprüche 12 bis 14, dadurch gekennzeichnet, daß man die Fällflüssigkeit so lange auf die durch diese ausgefällte Membran einwirken läßt, bis aus dieser praktisch das gesamte Lösungsmittel durch Fällflüssigkeit ersetzt ist.

**16.** Verfahren nach einem der Ansprüche 12 bis 15, dadurch gekennzeichnet, daß die Membran von Fällflüssigkeit befreit wird, indem sie in einem Luftstrom getrocknet wird.

**17.** Verfahren nach einem der Ansprüche 12 bis 16, dadurch gekennzeichnet, daß die Membran vor dem Trocknen mit einem Weichmacher, vorzugsweise Glycerin, behandelt und danach getrocknet wird.

**18.** Verfahren nach Anspruch 16 oder 17, dadurch gekennzeichnet, daß die Membran bei einer Temperatur von 50 °C getrocknet wird.

**19.** Verfahren nach Anspruch 15, dadurch gekennzeichnet, daß die Membran, bei der praktisch das gesamte Lösungsmittel durch Fällflüssigkeit ersetzt ist, zur Veränderung des Rückhaltevermögens einer Wärmebehandlung in einer Flüssigkeit unterzogen wird.

**20.** Verfahren nach Anspruch 19, dadurch gekennzeichnet, daß die Wärmebehandlung in einer inerten Flüssigkeit durchgeführt wird.

**21.** Verfahren nach Anspruch 15, dadurch gekennzeichnet, daß die Membran, bei der praktisch das gesamte Lösungsmittel -durch Fällflüssigkeit ersetzt ist, zur Veränderung des Rückhaltevermögens einer Wärmebehandlung mit Wasserdampf unterzogen wird.

**22.** Verfahren nach Anspruch 17, dadurch gekennzeichnet, daß die mit Weichmacher behandelte Membran zur Veränderung des Rückhaltevermögens einer Wärmebehandlung in warmer Luft mit einer rel. Luftfeuchtigkeit von 20 bis 100 % unterzogen wird.

**23.** Verfahren nach einem der Ansprüche 19 oder 22, dadurch gekennzeichnet, daß die Wärmebehandlung bei einer Temperatur im Bereich von 60 bis 220 °C über einen Zeitraum von 0,1 bis 96 h erfolgt.

## Claims

**1.** Semipermeable membrane made from a homogeneously miscible polymer blend, wherein the principal constituents of the homogeneously miscible polymer blend comprise an aromatic polyamide and polyvinyl pyrrolidone, wherein the aromatic polyamide is a homo- or copolyaramide comprising at least one recurrent structural unit of the formula I

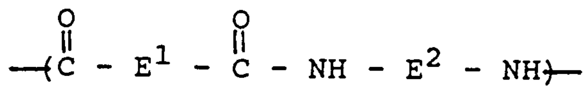 (I)

wherein $E^1$ and $E^2$ are identical or different and are selected from the groupings

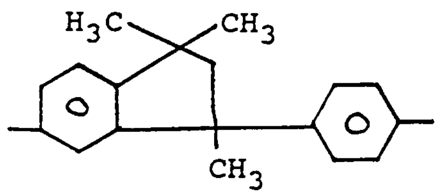

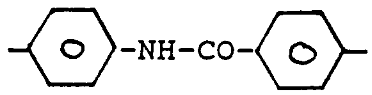

- $Ar^1$-, and
- $Ar^1$-X-$Ar^2$,

where $Ar^1$ and $Ar^2$ are the same or different 1,2-phenylene, 1,3-phenylene or 1,4-phenylene groups which may be substituted by $(C_1$-$C_6)$-alkyl, $(C_1$-$C_6)$-alkoxy, $-CF_3$ or halogen and X denotes

a) a direct bond or one of the following divalent groups
-O-, $-C(CF_3)_2-$, $-SO_2-$, -CO-, $-C(R^1)_2-$, with $R^1$ being hydrogen, $(C_1$-$C_6)$-alkyl or fluoroalkyl having from 1 to 4 carbon atoms in the alkyl group or

b) -Z-$Ar^1$-Z-, where Z is one of the groups -O- and $-C(CH_3)_2$ or

c) -O-$Ar^1$-Y-$Ar^2$-O-, where Y has the meaning given under Xa) above.

**2.** The membrane as claimed in claim 1, wherein halogen comprises fluorine, chlorine or bromine.

**3.** The membrane as claimed in any of claims 1 or 2. wherein the grouping $E^1$ comprises identical or different structural units and denotes a 1,3- or 1,4-phenylene group or the group

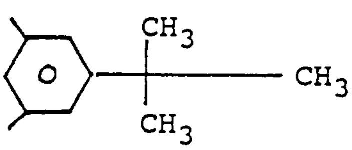 or 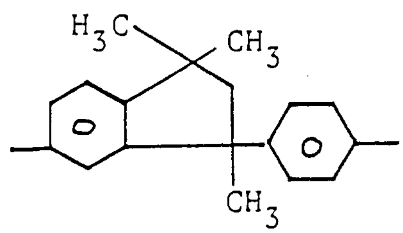

**4.** The membrane as claimed in any of claims 1 or 2, wherein the grouping $E^2$ comprises identical or different structural units and denotes the 1,4-phenylene group or the group

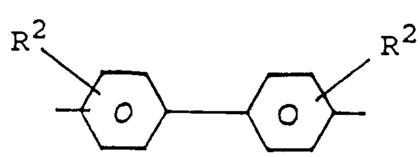

wherein $R^2$ denotes a lower alkyl or alkoxy group having up to 4 carbon atoms each in the alkyl group

or F, Cl or Br or the group

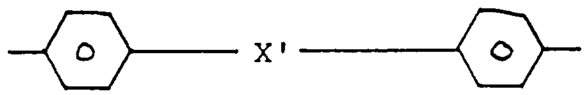

in which X' is the group $-C(R^1)_2-$, with $R^1$ being hydrogen or $(C_1-C_4)$ alkyl, or the grouping

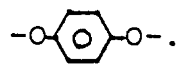

**5.** The membrane as claimed in any one or several of claims 1 to 4, comprising

a) poly-N-vinylpyrrolidone and

b) at least one copolyaramide having at least three randomly recurring structural units of the formula I, wherein

$E_1$ is a divalent p-phenylene group,

$E_2$ in the three recurrent structural units is one each of a divalent p-phenylene group, a group of the formula

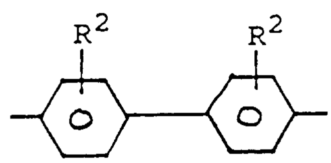

with $R^2$ being $-CH_3-$, $OCH_3$, F, Cl or Br, and a group of the formula

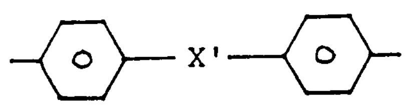

in which X' has the above-indicated meaning.

**6.** The membrane as claimed in claim 5, wherein the copolyaramide has the recurrent structural units

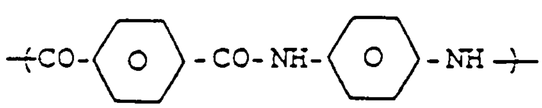

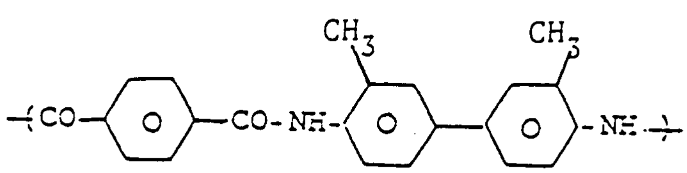

and

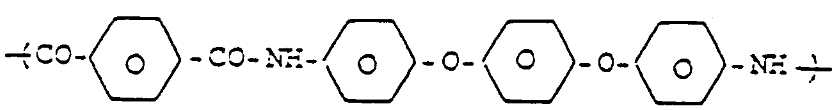

7. The membrane as claimed in any one or several of claims 1 to 6, wherein the aromatic poylamide may be present in the form of a random copolymer and also in the form of a block copolymer or a graft copolymer.

8. The membrane as claimed in any one or several of claims 1 to 7, wherein the homogeneously miscible polymer blend is prepared by polycondensing aromatic diamines and aromatic dicarboxylic acids or their derivatives which are capable of undergoing polycondensation, in the presence of polyvinyl pyrrolidone.

9. The membrane as claimed in any one or several of claims 1 to 8, which contains polyvinyl pyrrolidone having a molecular weight, indicated as the weight average, in the range from 1,000 to 3,000,000, preferably from 40,000 to 200,000.

10. The membrane as claimed in any one or several of claims 1 to 9, which contains the polyvinyl pyrrolidone in quantities from 1 to 80 % by weight, preferably from 5 to 60 % by weight, relative to the sum of components.

11. The membrane as claimed in any one or several of claims 1 to 10, which is asymmetric.

12. Process for the production of a membrane as claimed in any of claims 1 to 11, in which the solution of the homogeneously miscible polymer blend is spread as a liquid layer on a planar substrate, and precipitation liquid which is miscible with the solvent of the solution, but in which the dissolved homogeneously miscible polymer blend is precipitated as a membrane is then applied to the liquid layer, wherein the solvents used for the homogeneously miscible polymer blend comprise aprotic, polar solvents of the amide type, preferably N,N-dimethylacetamide or, in particular, N-methyl-2-pyrrolidone.

13. The process as claimed in claim 12, wherein part of the solvent is evaporated prior to coagulation into a membrane.

14. The process as claimed in claim 12, wherein the precipitation liquid used is water.

15. The process as claimed in any of claims 12 to 14, wherein the precipitation liquid is allowed to act on the membrane precipitated thereby until virtually all the solvent has been replaced therein by precipitation liquid.

16. The process as claimed in any of claims 12 to 15, wherein the membrane is freed from precipitation liquid by being dried in a stream of air.

17. The process as claimed in any of claims 12 to 16, wherein the membrane is treated, before drying, with a plasticizer, preferably glycerol, and is then dried.

18. The process as claimed in claim 16 or 17, wherein the membrane is dried at a temperature of 50 °C.

19. Process as claimed in claim 15, wherein the membrane, in which virtually all the solvent has been replaced by precipitation liquid, is subjected to heat treatment in a liquid in order to modify retension capacity.

20. The process as claimed in claim 19, wherein the heat treatment is carried out in an inert liquid.

21. Process as claimed in claim 15, wherein the membrane, in which virtually all the solvent has been replaced by precipitation liquid, is subjected to heat treatment with steam in order to modify retension capacity.

22. Process as claimed in claim 17, wherein the membrane, which has been treated with plasticizer, is subjected to heat treatment in warm air of relative atmospheric humidity of 20 to 100 % in order to modify retension capacity.

**23.** The process as claimed in either of claims 19 or 22, wherein the heat treatment is carried out at a temperature in the range from 60 to 220 °C over a period of 0.1 to 96 hours.

**Revendications**

**1.** Membrane semi-perméable à base d'un alliage de polymères mélangés de façon homogène, contenant en tant que composants principaux un polyamide aromatique et une polyvinylpyrrolidone, le polyamide aromatique étant un homo- ou copolyaramide comportant au moins un motif structural répété de formule (I)

$$-(-\overset{O}{\overset{\|}{C}}-E^1-\overset{O}{\overset{\|}{C}}-NH-E^2-NH-)- \qquad (I)$$

dans laquelle $E^1$ et $E^2$ sont identiques ou différents et sont choisis parmi les groupements

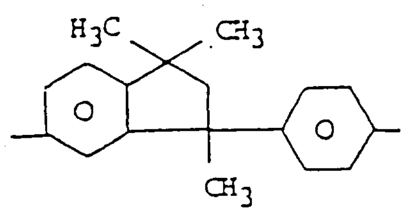

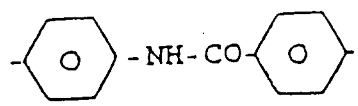

$-Ar^1-$
$-Ar^1-X-Ar^2-$,
dans lesquels $Ar^1$ et $Ar^2$ sont des radicaux 1,2-phénylène, 1,3-phénylène ou 1,4-phénylène identiques ou différents, qui peuvent être substitués par des groupes alkyle en $C_1$-$C_6$,alcoxy en $C_1$-$C_6$, $-CF_3$ ou par des atomes d'halogène, et le radical X

a) est une liaison directe ou représente l'un des radicaux bivalents suivants
-O-, $-C(CF_3)_2-$, $-SO_2-$, -CO-, $-C(R^1)_2-$, dans lequel $R^1$ est un atome d'hydrogène ou un groupe alkyle en $C_1$-$C_6$ ou fluoroalkyle ayant de 1 à 4 atomes de carbone dans le fragment alkyle, ou
b) représente un groupe $-Z-Ar^1-Z-$ dans lequel Z est le radical -O- ou $-C(CH_3)_2$, ou
c) représente un groupe $-O-Ar^1-Y-Ar^2-O-$ dans lequel Y a la signification donnée en a).

**2.** Membrane selon la revendication 1, caractérisée en ce que l'halogène est le fluor, le chlore ou le brome.

**3.** Membrane selon la revendication 1 ou 2, caractérisée en ce que le groupement $E^1$ est le même ou est différent dans les motifs structuraux et représente un radical 1,3- ou 1,4-phénylène ou le radical

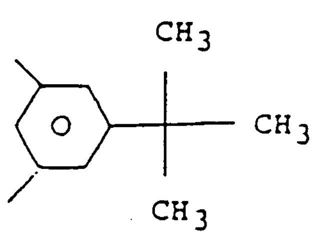 ou 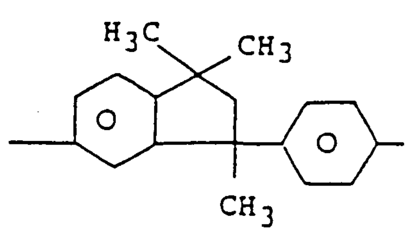

4. Membrane selon la revendication 1 ou 2, caractérisée en ce que le groupement $E^2$ est le même ou est différent dans les motifs structuraux et représente le radical 1,4-phénylène ou le radical

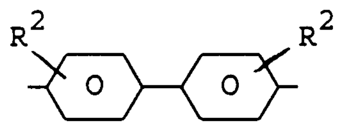

dans lequel $R^2$ représente un groupe alkyle ou alcoxy inférieur ayant chacun jusqu'à 4 atomes de carbone dans le fragment alkyle, ou F, Cl ou Br, ou le radical

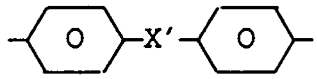

X' représentant le groupe $-C(R^1)_2-$ dans lequel $R^1$ est un atome d'hydrogène ou un groupe alkyle en $C_1$-$C_4$, ou le groupement

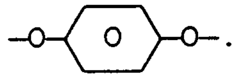

5. Membrane selon une ou plusieurs des revendications 1 à 4, contenant
   a) de la poly-N-vinylpyrrolidone et
   b) au moins un copolyaramide comportant au moins 3 motifs structuraux répétés de façon aléatoire, de formule (I), dans laquelle
   - $E^1$ est un radical p-phénylène bivalent,
   - $E^2$, dans les 3 motifs structuraux répétitifs, est, à chaque fois un radical p-phénylène bivalent, un radical de formule

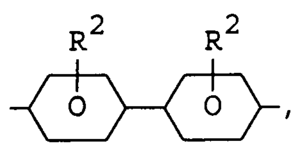

$R^2$ étant $-CH_3$, $OCH_3$, F, Cl ou Br, et un radical de formule

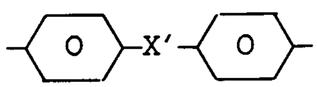

dans lequel X' a la signification indiquée plus haut.

6. Membrane selon la revendication 5, caractérisée en ce que le copolyaramide présente des motifs structuraux répétés

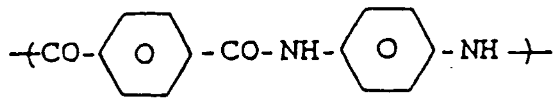

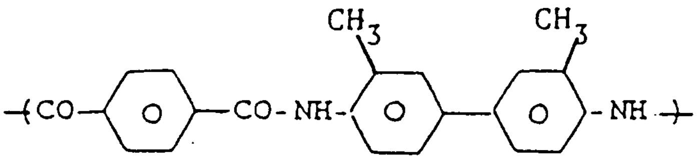

et

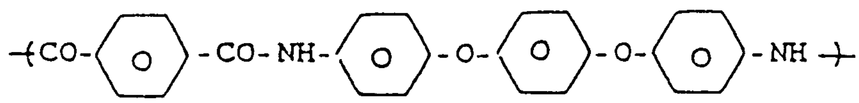

7. Memorane selon une ou plusieurs des revendication 1 à 6, caractérisée en ce que le polyamide aromatique peut se trouver aussi bien sous forme de copolymère statistique que de copolymère séquencé ou greffé.

8. Membrane selon une ou plusieurs des revendications 1 à 7, caractérisée en ce que l'alliage de polymères mélangés de façon homogène est préparé par polycondensation de diamines aromatiques et d'acides dicarboxyliques aromatiques ou de leurs dérivés aptes à la polycondensation, en présence de polyvinylpyrrolidone.

9. Membrane selon une ou plusieurs des revendication 1 à 8, caractérisée en ce qu'elle contient de la polyvinylpyrrolidone ayant une masse moléculaire, indiquée en moyenne en poids, dans la plage allant de 1 000 à 3 000 000, de préférence de 40 000 à 200 000.

10. Membrane selon une ou plusieurs des revendication 1 à 9, caractérisée en ce que la polyvinylpyrrolidone est contenue en proportions allant de 1 à 80 % en poids, de préférence de 5 à 60 % en poids, par rapport à la somme des composants.

11. Membrane selon une ou plusieurs des revendication 1 à 10, caractérisée en ce qu'elle est asymétrique.

12. Procédé pour la fabrication d'une membrane selon l'une des revendications 1 à 11, dans lequel on étale sous forme d'une couche liquide la solution de l'alliage de polymères, mélangés de façon homogène, sur un support plan, et on applique ensuite sur la couche liquide un liquide de précipitation qui est miscible au solvant de la solution, mais dans lequel l'alliage de polymères dissous, mélangés de façon homogène, est précipité sous forme d'une membrane, caractérisé en ce que, en tant que solvant pour l'alliage de polymères miscibles de façon homogène, on utilise des solvants aprotiques polaires du type amide, de préférence le N,N-diméthylacétamide ou en particulier la N-méthyl-2-pyrrolidone.

13. Procédé selon la revendication 12, caractérisé en ce qu'une partie du solvant est évaporée avant la coagulation conduisant à la membrane.

14. Procédé selon la revendication 12, caractérisé en ce que, en tant que liquide de précipitation, on utilise l'eau.

15. Procédé selon l'une des revendications 12 à 14, caractérisé en ce que l'on fait agir le liquide de précipitation, sur la membrane précipitée par celui-ci, jusqu'à ce que pratiquement la totalité du solvant de celle-ci soit remplacée par du liquide de précipitation.

16. Procédé selon l'une des revendications 12 à 15, caractérisé en ce que l'on élimine de la membrane le liquide de précipitation en la séchant dans un courant d'air.

17. Procédé selon l'une des revendications 12 à 16, caractérisé en ce que la membrane est traitée avant le séchage par un plastifiant, de préférence le glycérol, et ensuite séchée.

18. Procédé selon la revendication 16 ou 17, caractérisé en ce que la membrane est séchée à une température de 50 °C.

19. Procédé selon la revendication 15, caractérisé en ce que la membrane, dans laquelle pratiquement la totalité du solvant est remplacée par du liquide de précipitation, est soumise à un traitement thermique dans un liquide, pour la modification du pouvoir de rétention.

20. Procédé selon la revendication 19, caractérisé en ce que le traitement thermique est effectué dans un liquide inerte.

21. Procédé selon la revendication 15, caractérisé en ce que la membrane, dans laquelle pratiquement la totalité du solvant est remplacée par du liquide de précipitation, est soumise à un traitement thermique par de la vapeur d'eau, pour la modification du pouvoir de rétention.

22. Procédé selon la revendication 17, caractérisé en ce que la membrane traitée par un plastifiant est soumise à un traitement thermique dans de l'air chaud ayant une humidité relative de l'air de 20 à 100 %, pour la modification du pouvoir de rétention.

23. Procédé selon la revendication 19 ou 22, caractérisé en ce que le traitement thermique est effectué à une température dans la plage de 60 à 220 °C, pendant une durée de 0,1 à 96 heures.